# FASCICULE DE BREVET EUROPEEN

(11) **EP 1 380 793 B1**
(45) Date de publication et mention de la délivrance du brevet: **03.12.2008**
(21) Numéro de dépôt: 03356109.3
(22) Date de dépôt: 10.07.2003
(51) Int. Cl.: F16M 11/12

(54) **Dispositif mécanique pour le déplacement d'un appareil de prises de vues**
Mechanische Vorrichtung zur Bewegung einer Kamera
Mechanical device for the movement of a camera

(30) Priorité: 12.07.2002 FR 0208790
(43) Date de publication de la demande: 14.01.2004
(73) Titulaire: Kaczek, Frédéric-Gérard, 1140 Wien (AT)
(72) Inventeur: Pelerin, Jean-Michel, 69400 Villefranche (FR)
(74) Mandataire: Babeluk, Michael

(56) Documents cités:
- EP-A- 0 966 154
- FR-A- 2 538 878
- US-A- 5 617 762
- US-A- 6 027 085

## Description

La présente invention est relative à un dispositif mécanique permettant de faire pivoter et déplacer en translation verticale un élément fixe.

Dans l'art antérieur de tels dispositifs sont connus. La demande Européenne EP 0 966 154 A1 par exemple (correspondant au préambule de la revendication indépendante) décrit un dispositif de commande de distance avec lequel une caméra installée sur ce dispositif puisse se déplacer le long des trois axes x, y, z.

La présente invention est particulièrement relative à un dispositif mécanique permettant de faire pivoter et déplacer en translation verticale un appareil de prises de vues selon trois axes distincts selon une amplitude de 180 degrés chacun.

Le dispositif mécanique suivant la présente invention comprend un support fixe et des moyens de guidage et d'entraînement permettant de déplacer dans un repère géométrique x, y, z disposé à l'extérieur du support fixe ledit appareil de prises de vue.

Le dispositif mécanique comprend des moyens de guidage et d'entraînement qui permettent de déplacer l'appareil de prises de vue dans des mouvements de rotation et de translation verticale contenus dans le repère géométrique x, y, z selon trois directions distinctes, ayant chacune une amplitude de 180 degrés. L'invention est définie dans la revendication indépendante. D'autres caractéristiques de l'invention sont décrites dans les revendications dépendantes.

Avantageusement, le dispositif mécanique suivant la présente invention comprend un repère géométrique x, y, z qui est centré en un point C qui se trouve à l'extérieur du support fixe.

II est préféré que le dispositif mécanique suivant l'invention comprend un support fixe autour duquel pivote dans un plan horizontal une première couronne solidaire dans un plan vertical de glissières parallèles permettant d'une part la translation verticale de l'appareil par rapport au support et d'autre part le pivotement angulaire de l'appareil par rapport au support dans un plan vertical et perpendiculaire à celui contenant la première couronne et une double couronne permettant le pivotement angulaire de l'appareil autour de son axe principal.

Avantageusement, le dispositif mécanique suivant la présente invention comporte, pour chaque déplacement en rotation et en translation de l'appareil de prises de vues par rapport au support fixe, un dispositif d'entraînement.

Il est préféré que le dispositif mécanique comporte un support fixe qui est constitué d'une plaque supérieure horizontale solidaire de pieds en forme d'équerre, réunis entre eux par une tige horizontale.

Avantageusement, le dispositif mécanique suivant la présente invention comporte une plaque supérieure comprenant au moins un bord en forme d'arc de cercle au dessous duquel est guidée en rotation une couronne présentant un profil ouvert en forme de C de manière que le centre de ladite couronne soit porté par l'axe vertical yy' du repère géométrique x, y, z du dispositif mécanique.

Il est préféré que le dispositif mécanique suivant la présente invention comporte une couronne qui est déplacée en rotation autour de son axe vertical yy' et par rapport au support fixe par l'intermédiaire d'un premier moto réducteur fixé sous la plaque dudit support fixe.

Dans une variante avantageuse de la présente invention le dispositif mécanique comporte une couronne qui est solidaire, au niveau d'une ouverture, de deux glissières disposées l'une en face de l'autre et s'étendant suivant une direction verticale vers le bas, c'est à dire, en dessous de la couronne, lesdites glissières coopérant respectivement avec des axes de rotation permettant d'une part le guidage et le déplacement vertical de l'appareil de prises de vues par rapport au support et d'autre part le pivotement angulaire de l'appareil par rapport au support dans un plan vertical et perpendiculaire à celui contenant la première couronne.

Avantageusement, le dispositif mécanique comporte un appareil de prises de vues qui est solidaire, à l'opposé de son objectif, d'une double couronne à profil fermé comportant une première couronne externe fixe à l'intérieur de laquelle est guidée en rotation une seconde couronne interne sur laquelle est fixé l'appareil de prises de vues.

Il est préféré que le dispositif mécanique suivant la présente invention comporte une couronne externe fixe qui est solidaire sur son pourtour de deux traverses parallèles qui sont disposées l'une en face de l'autre et qui portent chacune à leur extrémité libre un axe de rotation guidé respectivement dans les glissières verticales de la première couronne.

Avantageusement, le dispositif mécanique comporte une couronne externe qui est solidaire sur son pourtour et entre les traverses d'un deuxième moto réducteur permettant l'entraînement en rotation de la couronne interne à l'intérieur de celle externe et le déplacement de l'appareil de prises de vues en rotation autour de son axe.

Il est préféré que le dispositif mécanique suivant la présente invention comporte une traverse solidaire de la couronne externe qui porte un troisième moto réducteur permettant le déplacement vertical, suivant l'axe yy', de l'appareil de prises de vues à l'intérieur des glissières d'une position haute vers une position basse et inversement.

Avantageusement, le dispositif mécanique suivant la présente invention permet, en fonction de chaque position angulaire de la première couronne autour de l'axe yy' obtenue par l'entraînement du premier moto réducteur à l'appareil de prises de vues, de pivoter autour de son axe principal au moyen du deuxième moto réducteur, de pivoter autour de ses axes horizontaux d'une position maximale dont l'objectif est dirigé vers le haut à une position maximale dont l'objectif est dirigé vers le bas au moyen du troisième moto réducteur en passant par toutes les positions intermédiaires, et de se déplacer en translation verticale à l'intérieur des glissières.

La description qui va suivre en regard des dessins annexés, donnés à titre d'exemples non limitatifs, permettra de mieux comprendre l'invention, les caractéristiques qu'elle présente et les avantages qu'elle est susceptible de procurer:
Figure 1 est une vue en perspective illustrant le dispositif mécanique suivant la présente invention dont l'appareil de prises de vues est dirigé suivant un axe horizontal zz'. Figure 2 est une vue en perspective montrant le dispositif mécanique suivant la présente invention dont l'appareil de prises de vues est dirigé suivant un axe vertical yy' vers le haut.
Figure 3 est une vue en perspective représentant le dispositif mécanique suivant la présente invention dont l'appareil de prises de vues est dirigé suivant un axe vertical yy' vers le bas.
Figure 4 est une vue en perspective illustrant le dispositif mécanique suivant la présente invention après une première rotation dudit dispositif et dont l'appareil de prises de vues est dirigé suivant un axe horizontal xx'.
Figure 5 est une vue semblable à celle de figure 4, mais représentant l'appareil de prises de vues dirigé suivant un axe vertical yy' vers le haut.
Figure 6 est une vue en perspective arrière montrant le dispositif mécanique suivant la présente invention.

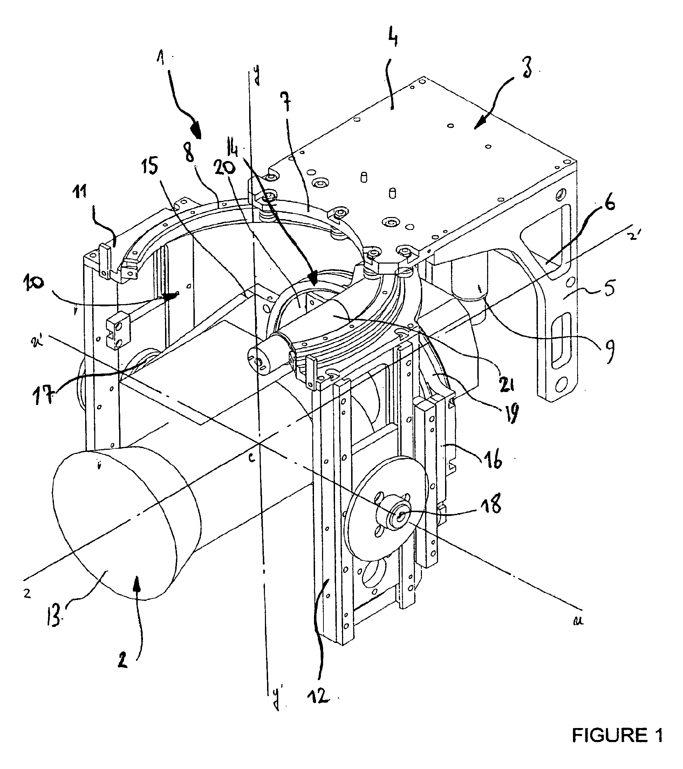

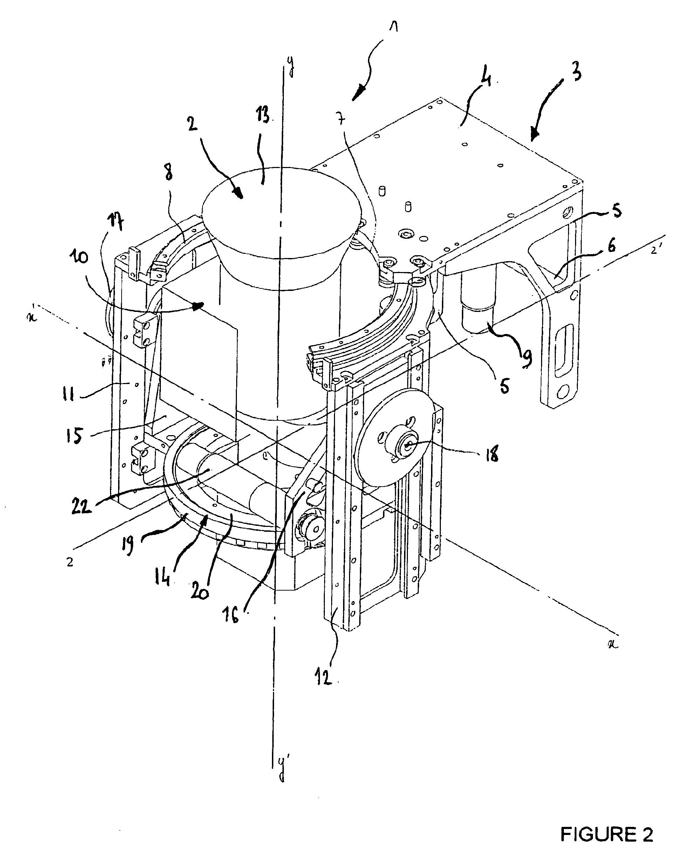

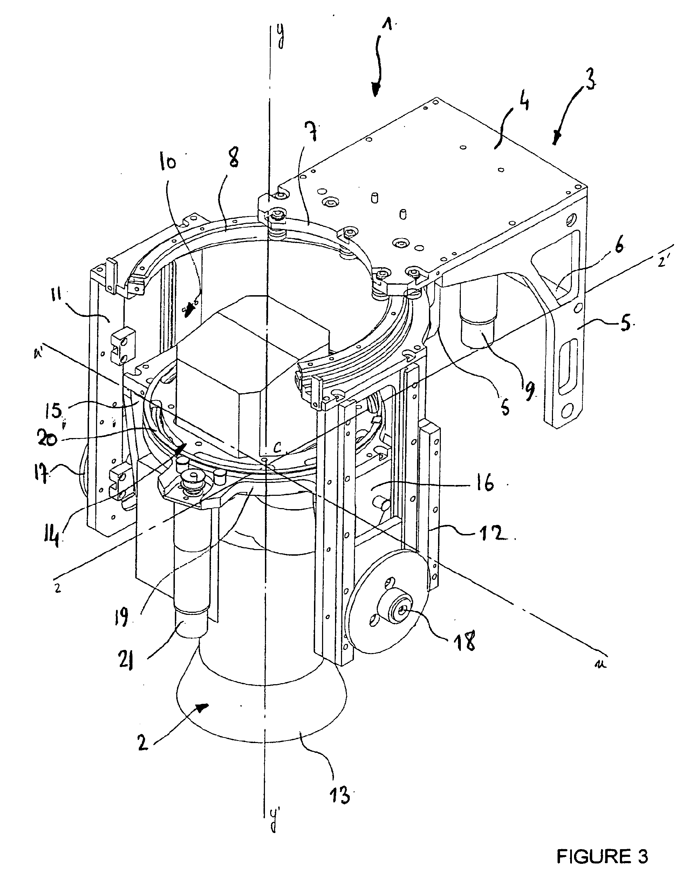

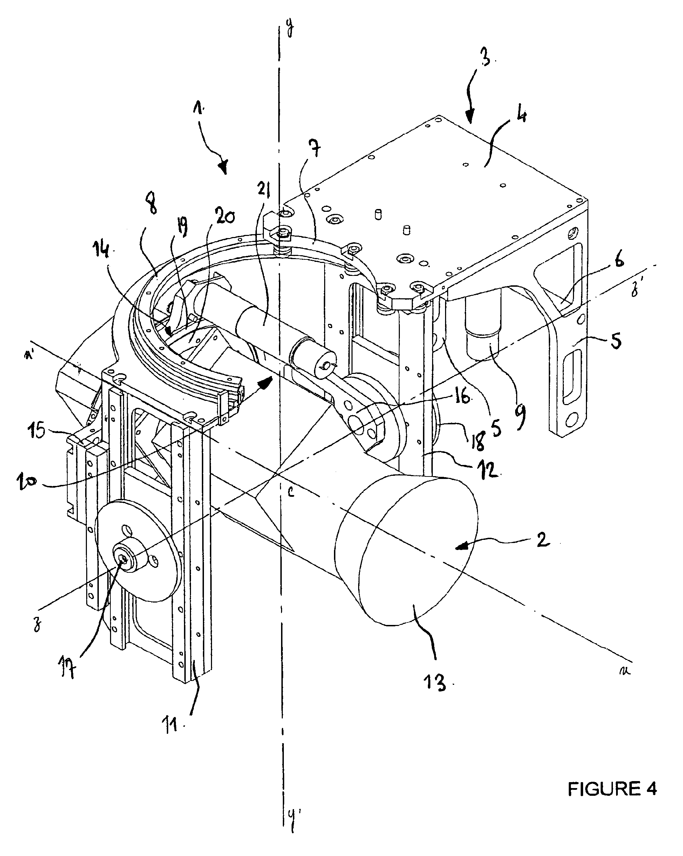

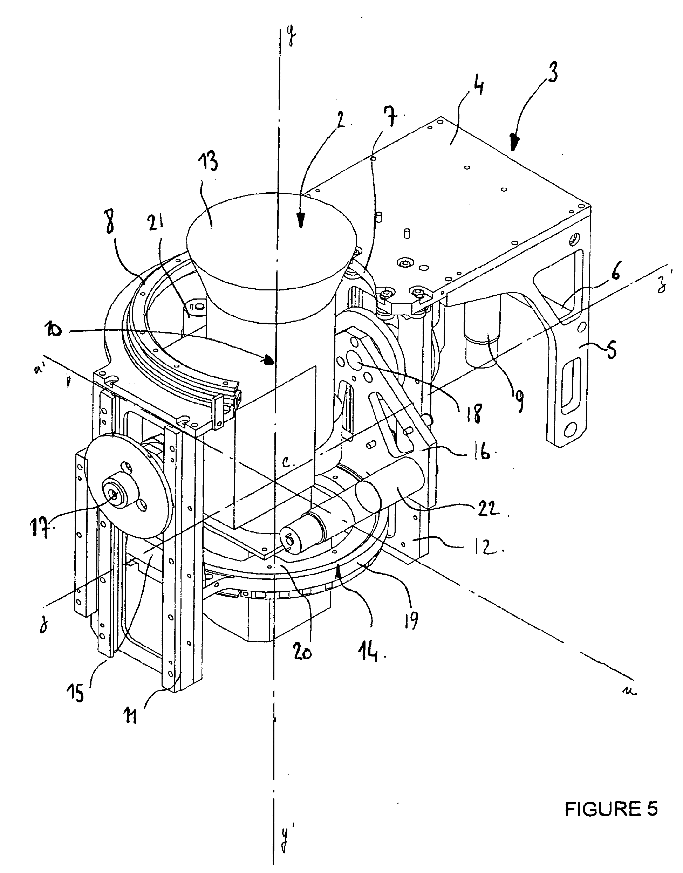

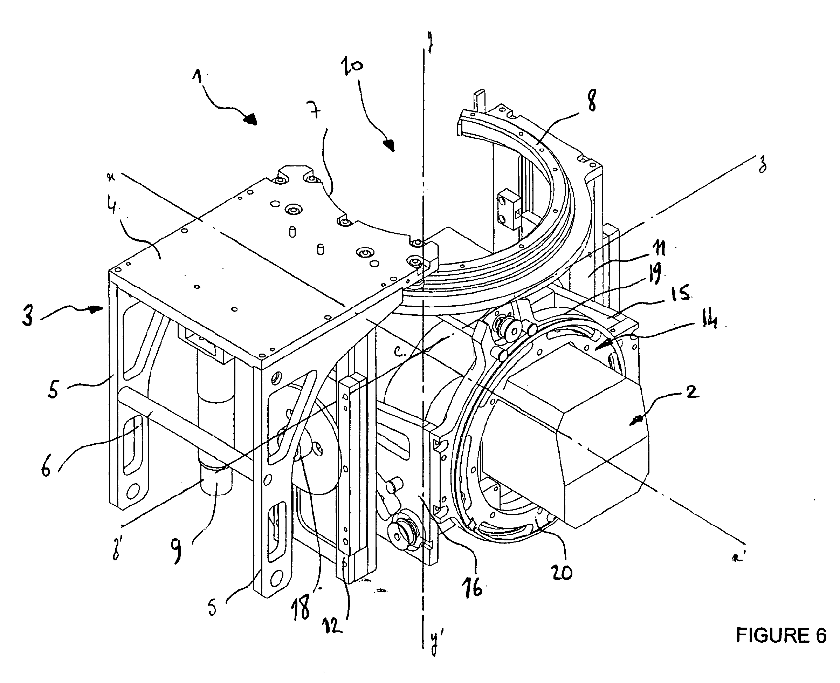

On a montré en figures 1 à 6 un dispositif mécanique 1 permettant de faire pivoter un élément fixe et plus particulièrement un appareil de prises de vues 2 selon trois axes distincts xx', yy', zz'.

Le dispositif mécanique 1 comporte un support fixe 3 et des moyens de guidage et d'entraînement permettant de déplacer, dans un repère géométrique x, y, z disposé à l'extérieur du support fixe 3, un appareil de prises de vue 2.

Les moyens de guidage et d'entraînement permettent de déplacer l'appareil de prises de vue 2 dans des mouvements de rotation et de translation verticale contenus dans le repère géométrique x, y, z selon trois directions distinctes, ayant chacune une amplitude de 180 degrés.

Le repère géométrique x, y, z est centré en un point c qui se trouve à l'extérieur du support fixe 3.

Le support fixe 3 peut être assemblé ou constitué avec celui d'un dispositif de soutien et de pré-stabilisation permettant de porter une charge placée en déport à l'extrémité d'un parallélogramme déformable, tout en maintenant l'équilibre vertical et horizontal de cette charge comme il est connu dans l'art antérieur.

Le support 3 est constitué d'une plaque supérieure horizontale 4 solidaire de pieds 5 en forme d'équerre, réunis entre eux par une tige horizontale 6.

La plaque supérieure 4 comporte au moins un bord 7 en forme d'arc de cercle au dessous duquel est guidée en rotation une couronne 8 présentant un profil ouvert en forme de C.

Le centre de la couronne 8 se trouve sur l'axe vertical yy' passant par le centre **c** du repère géométrique x, y, z.

La couronne 8 est déplacée en rotation autour de son axe vertical yy' et par rapport au support fixe 3 par l'intermédiaire d'un premier moto réducteur 9 fixé sous la plaque 4 dudit support fixe.

La couronne 8 est solidaire au niveau de son ouverture 10 de deux glissières 11, 12 disposées l'une en face de l'autre et s'étendant suivant une direction verticale vers le bas, c'est à dire en dessous de la couronne 8.

L'ouverture 10 de la couronne 8 permet le basculement vertical vers le haut ou vers le bas de l'appareil de prises de vues 2.

L'appareil de prises de vues 2 est solidaire à l'opposé de son objectif 13 d'une double couronne 14 à profil fermé.

La double couronne 14 comporte une première couronne externe fixe 19 à l'intérieur de laquelle est guidée en rotation une seconde couronne interne 20 sur laquelle est fixé l'appareil de prises de vues 2.

La couronne externe 19 est solidaire sur son pourtour de deux traverses parallèles 15 ,16 qui sont disposées l'une en face de l'autre et qui portent chacune à leur extrémité libre un axe de rotation 17, 18 guidé respectivement dans les glissières verticales 11 et 12.

La couronne externe 19 est solidaire sur son pourtour et entre les traverses 15, 16 d'un second moto réducteur 21 permettant l'entraînement en rotation de la seconde couronne interne 20 à l'intérieur de la première.

La rotation de la seconde couronne 20, à l'intérieur de la première 19 fixe entre les glissières verticales 11, 12, permet de déplacer l'appareil de prises de vues 2 en rotation autour de son axe principal et longitudinal.

La traverse 16 solidaire de la couronne externe 19 porte un troisième moto réducteur 22 permettant le déplacement en rotation de l'appareil de prises de vues 2 autour des axes de rotation 17, 18 guidés dans les glissières verticales 11, 12.

Le dispositif mécanique 1 comporte un quatrième moto réducteur, non représenté, permettant à l'appareil de prises de vues 2 de se déplacer en translation verticale à l'intérieur des glissières 11, 12.

Dans notre exemple de réalisation non limitatif, le troisième moto réducteur 22 peut permettre de réaliser simultanément le déplacement de l'appareil de prises de vue 2 en rotation autour des axes 17, 18 et en translation verticale dans les glissières 11, 12.

Ainsi, on comprend de la description ci-dessus que le dispositif mécanique 1 permet à l'appareil de prises de vues 2 de se déplacer dans des rotations à 180 degrés indépendantes les unes des autres et dans une translation verticale, de manière que l'ensemble des mouvements soit contenu dans le repère géométrique x, y, z.

En effet, suivant chaque position angulaire de la couronne 8 autour de l'axe yy' obtenue par l'entraînement du premier moto réducteur 9, l'appareil de prises de vues 2 peut:
- pivoter autour de son axe principal au moyen du deuxième moto réducteur 21,
- pivoter autour de ses axes horizontaux 17, 18 d'une position maximale dont l'objectif 13 est dirigé vers le haut à une position maximale dont l'objectif 13 est dirigé vers le bas au moyen du troisième moto réducteur 22 en passant par toutes les positions intermédiaires,
- se déplacer en translation verticale à l'intérieur des glissières 11, 12.

On note que chaque mouvement est indépendant des autres et est commandé par une unité centrale externe non représentée pilotée par un opérateur de prises de vues.

On constate que le centre c du repère géométrique x, y, z est décalé latéralement pour se trouver à l'extérieur du support fixe 3 de manière que l'appareil de prises de vue 2 puisse se déplacer dans ses différents mouvements.

On remarque que selon le nombre de moto réducteurs utilisés certains mouvements de rotations et de translations verticales peuvent être combinés deux à deux.

On note que chaque moto réducteur peut être remplacé par un dispositif d'entraînement ayant d'autres caractéristiques techniques sans pour cela changer l'objet de la présente invention.

## Revendications

1. Dispositif mécanique pour le déplacement d'un appareil de prises de vue (2), comprenant un support fixe (3) et des moyens de guidage et d'entraînement qui permettent de déplacer l'appareil de prises de vue (2) dans des mouvements de rotation et de translation verticale contenus dans un repère géométrique x, y, z, **caractérisé en ce que** le repère géométrique x, y, z est disposé à l'extérieur du support fixe (3) et que les mouvements de rotation et de translation verticale sont contenus dans le repère géométrique x, y, z selon trois directions distinctes, ayant chacune une amplitude de 180 degrés.

2. Dispositif mécanique suivant la revendication 1, **caractérisé en ce que** le repère géométrique x, y, z est centré en un point c qui se trouve à l'extérieur du support fixe (3).

3. Dispositif mécanique suivant la revendication 1, **caractérisé en ce qu'**il comprend un support fixe (3) autour duquel pivote dans un plan horizontal une première couronne (8) solidaire dans un plan vertical de glissières parallèles (11, 12) permettant d'une part la translation verticale de l'appareil (2) par rapport au support (3) et d'autre part le pivotement angulaire de l'appareil (2) par rapport au support (3) dans un plan vertical et perpendiculaire à celui contenant la première couronne (8) et une double couronne (14) permettant le pivotement angulaire de l'appareil (2) autour de son axe principal.

4. Dispositif mécanique suivant la revendication 1, **caractérisé en ce que** chaque déplacement en rotation et en translation de l'appareil de prise de vues (2) par rapport au support fixe (3) est assuré par un dispositif d'entraînement (9, 21, 22).

5. Dispositif mécanique suivant la revendication 1, **caractérisé en ce que** le support fixe (3) est constitué d'une plaque supérieure horizontale (4) solidaire de pieds (5) en forme d'équerre réunis entre eux par une tige horizontale (6).

6. Dispositif mécanique suivant la revendication 5, **caractérisé en ce que** la plaque supérieure horizontale (4) comporte au moins un bord (7) en forme d'arc de cercle au dessous duquel est guidée en rotation une première couronne (8) présentant un profil ouvert en forme de C de manière que le centre de ladite couronne (8) soit porté par l'axe vertical yy' du repère géométrique x, y, z.

7. Dispositif mécanique suivant la revendication 5, **caractérisé en ce que** la couronne (8) est déplacée en rotation autour de son axe vertical yy' et par rapport au support fixe (3) par l'intermédiaire d'un premier moto réducteur (9) fixé sous la plaque supérieure horizontale (4) dudit support fixe.

8. Dispositif mécanique suivant la revendication 3, **caractérisé en ce que** ladite couronne (8) est solidaire au niveau d'une ouverture (10) de deux glissières (11, 12) disposées l'une en face de l'autre et s'étendant suivant une direction verticale vers le bas, c'est à dire, en dessous de la couronne (8), lesdites glissières coopérant respectivement avec des axes de rotation (17, 18) permettant d'une part le guidage et le déplacement vertical de l'appareil de prise de vues (2) par rapport au support (3) et d'autre part le pivotement angulaire de l'appareil (2) par rapport au support (3) dans un plan vertical et perpendiculaire à celui contenant la première couronne (8).

9. Dispositif mécanique suivant la revendication 3, **caractérisé en ce que** l'appareil de prises de vues (2) est solidaire à l'opposé de son objectif (13) d'une double couronne (14) à profil fermé comportant une première couronne externe fixe (19) à l'intérieur de laquelle est guidée en rotation une seconde couronne interne (20) sur laquelle est fixé l'appareil de prises de vues (2).

10. Dispositif mécanique suivant la revendication 9, **caractérisé en ce que** la couronne externe fixe (19) est solidaire sur son pourtour de deux traverses parallèles (15 ,16) qui sont disposées l'une en face de l'autre et qui portent chacune à leur extrémité libre un axe de rotation (17, 18) guidé respectivement dans les glissières verticales (11, 12) de la première couronne (8).

11. Dispositif mécanique suivant la revendication 10, **caractérisé en ce que** ladite couronne externe fixe (19) est solidaire sur son pourtour et entre les traverses (15, 16) d'un deuxième moto réducteur (21) permettant l'entraînement en rotation de la couronne interne (20) à l'intérieur de celle externe fixe (19) et le déplacement de l'appareil de prises de vues (2) en rotation autour de son axe.

12. Dispositif mécanique suivant la revendication 10, **caractérisé en ce que** la traverse (16) solidaire de la couronne externe fixe (19) porte un troisième moto réducteur (22) permettant le déplacement vertical, suivant l'axe yy', de l'appareil de prises de vues (2) à l'intérieur des glissières (11, 12) d'une position haute vers une position basse et inversement.

13. Dispositif mécanique suivant la revendication 3, **caractérisé en ce qu'**il permet en fonction de chaque position angulaire de la couronne (8) autour de l'axe yy' obtenue par l'entraînement d'un premier moto réducteur (9), à l'appareil de prises de vues (2) de pivoter autour de son axe principal au moyen d'un deuxième moto réducteur (21), de pivoter autour de ses axes horizontaux (17, 18) d'une position maximale dont l'objectif (13) est dirigé vers le haut à une position maximale dont l'objectif (13) est dirigé vers le bas au moyen d'un troisième moto réducteur (22) en passant par toutes les positions intermédiaires, et de se déplacer en translation verticale à l'intérieur des glissières (11, 12).

## Claims

1. A mechanical device for displacing an image capturing apparatus (2), comprising a stationary support (3) and guiding and driving means for displacing said image capturing apparatus (2) in movements of rotation and of vertical translation contained in a geometrical grid x, y, z, **characterized in that** the geometrical grid x, y, z is disposed outside of the stationary support (3) and that the movements of rotation and of vertical translation are contained in the geometrical grid x, y, z according to three distinct directions, each of them having an amplitude of 180 degrees.

2. The mechanical device as set forth in claim 1, **characterized in that** the geometrical grid x, y, z is centered in a point c that is located outside of the stationary support (3).

3. The mechanical device as set forth in claim 1, **characterized in that** it incorporates a stationary support (3) about which pivots a first crown gear (8), which, in a vertical plane, is integral with parallel slide rails (11, 12) allowing on the one part the vertical translation of the apparatus (2) with respect to the support (3) and on the other part the angular pivotal movement of the apparatus (2) with respect to said support (3) in a plane which is vertical and perpendicular to the one containing the first crown gear (8) and a double crown gear (14) allowing for pivotal movement of the apparatus (2) about its principal axis.

4. The mechanical device as set forth in claim 1, **characterized in that** each displacement of the image capturing apparatus (2) in a movement of rotation and of translation with respect to the stationary support (3) is ensured by a driving device (9, 21, 22).

5. The mechanical device as set forth in claim 1, **characterized in that** the stationary support (3) is formed from an upper horizontal plate (4) that is integral with feet (5) having the shape of a square and being joined together by a horizontal rod (6).

6. The mechanical device as set forth in claim 5, **characterized in that** the upper horizontal plate (4) comprises at least one border (7) in the shape of an arc of a circle beneath which a first crown gear (8) having an open profile in the shape of a C is rotatably guided for the center of said crown gear (8) to be carried by the vertical axis yy' of the geometrical grid x, y, z.

7. The mechanical device as set forth in claim 5, **characterized in that** the crown gear (8) is displaced for rotation about its vertical axis yy' and with respect to the stationary support (3) through a first gear motor (9) fastened underneath the upper horizontal plate (4) of said stationary support.

8. The mechanical device as set forth in claim 3, **characterized in that** said crown gear (8) is integral in the region of an opening (10) of two slide rails (11, 12) disposed so as to face each other and extending downward in a vertical direction, meaning underneath the crown gear (8), said slide rails respectively cooperating with axes of rotation (17, 18) allowing on the one side guidance and vertical displacement of the image capturing apparatus (2) with respect to the support (3) and on the other side the angular pivotal movement of the apparatus (2) with respect to the support (3) in a plane which is vertical and perpendicular to the one containing the first crown gear (8).

9. The mechanical device as set forth in claim 3, **characterized in that**, on the side opposite to its lens (13), the image capturing apparatus (2) is integral with a double crown gear (14) having a closed profile comprising a first external stationary crown gear (19) within which a second internal crown gear (20) to which the image capturing apparatus (2) is fastened is rotatably guided.

10. The mechanical device as set forth in claim 9, **characterized in that**, on its circumference, the stationary external crown gear (19) is integral with two parallel cross members (15, 16) that are disposed so as to face each other, each carrying at its free end an axis of rotation (17, 18) that is respectively guided in the vertical slide rails (11, 12) of the first crown gear (8).

11. The mechanical device as set forth in claim 10, **characterized in that**, on its circumference and between the cross members (15, 16), the stationary external crown gear (19) is integral with a second gear motor (21) allowing for driving the internal crown gear (20) for rotation inside the stationary external one (19) and for rotational displacement of the image capturing apparatus (2) about its axis.

12. The mechanical device as set forth in claim 10, **characterized in that** the cross members (16), which is integral with the stationary external crown gear (19), carries a third gear motor (22) allowing for vertical displacement of the image capturing apparatus (2) along the axis yy' inside the sliding rails (11, 12) from a top position to a bottom position and vice versa.

13. The mechanical device as set forth in claim 3, **characterized in that**, as a function of each angular position of the crown gear (8) about the axis yy' obtained through the drive of a first gear motor (9), it allows the image capturing apparatus (2) to pivot about its main axis by means of a second gear motor (21), to pivot about its horizontal axes (17, 18) from a maximum position the lens (13) of which is directed upward to a maximum position the lens (13) of which is directed downward by means of a third gear motor (22), passing through all the intermediate positions and to move in vertical translation inside the slide rails (11, 12).

## Patentansprüche

1. Mechanische Vorrichtung zur Bewegung eines Bildaufnahmegeräts (2), enthaltend eine feststehende Halterung (3) sowie Führungs- und Antriebsmittel, die es ermöglichen, die Bildaufnahmevorrichtung (2) in Drehbewegungen und eine vertikale Translationsbewegung in einem geometrischen Bezugssystem x, y z zu versetzen, **dadurch gekennzeichnet, dass** das geometrische Bezugssystem x, y, z außerhalb der feststehenden Halterung (3) angeordnet ist und dass die Drehbewegungen sowie die vertikale Translationsbewegung in dem geometrischen Bezugssystem x, y, z entlang dreier unterschiedlicher Richtungen enthalten sind, die jeweils eine Amplitude von 180 Grad aufweisen.

2. Mechanische Vorrichtung nach Anspruch 1, **dadurch gekennzeichnet, dass** das geometrische Bezugssystem x, y, z in einem Punkt c zentriert ist, der sich außerhalb der feststehenden Halterung (3) befindet.

3. Mechanische Vorrichtung nach Anspruch 1, **dadurch gekennzeichnet, dass** sie eine fixe Halterung (3) umfasst, um die in einer horizontalen Ebene ein erster Kranz (8) geschwenkt wird, der in einer vertikalen Ebene mit parallelen Schienen (11, 12) fest verbunden ist, wodurch einerseits die vertikale Translationsbewegung des Geräts (2) in Bezug auf die Halterung (3) und andererseits die Winkelverschwenkung des Geräts (2) in Bezug auf die Halterung (3) in einer Ebene ermöglicht wird, die vertikal und senkrecht zu jener ist, die den ersten Kranz (8) und einen doppelten Kranz (14) enthält, der die Winkelverschwenkung des Geräts (2) um seine Hauptachse ermöglicht.

4. Mechanische Vorrichtung nach Anspruch 1, **dadurch gekennzeichnet, dass** jede Dreh- und Translationsbewegung des Bildaufnahmegeräts (2) in Bezug auf die feststehende Halterung (3) durch eine Antriebsvorrichtung (9, 21, 22) gewährleistet wird.

5. Mechanische Vorrichtung nach Anspruch 1, **dadurch gekennzeichnet, dass** die feststehende Halterung (3) aus einer oberen horizontalen Platte (4) gebildet ist, die mit winkelförmigen Beinen (5) fest verbunden ist, die durch einen horizontalen Stab (6) miteinander verbunden werden.

6. Mechanische Vorrichtung nach Anspruch 5, **dadurch gekennzeichnet, dass** die obere horizontale Platte (4) mindestens einen kreisbogenförmigen Rand (7) aufweist, unter dem ein erster Kranz (8) drehbeweglich geführt wird, der ein offenes Profil in Form eines C aufweist, derart, dass der Mittelpunkt des Kranzes (8) von der vertikalen Achse yy' des geometrischen Bezugssystems x, y, z getragen wird.

7. Mechanische Vorrichtung nach Anspruch 5, **dadurch gekennzeichnet, dass** der Kranz (8) in eine Drehbewegung um seine vertikale Achse yy' und in Bezug auf die feststehende Halterung (3) versetzt wird, und zwar durch einen ersten Getriebemotor (9), der unter der oberen horizontalen Platte (4) der feststehenden Halterung befestigt ist.

8. Mechanische Vorrichtung nach Anspruch 3, **dadurch gekennzeichnet, dass** der Kranz (8) im Bereich einer Öffnung (10) mit zwei Schienen (11, 12) fest verbunden ist, die einander gegenüberliegend angeordnet sind und sich in vertikaler Richtung nach unten, d.h. unterhalb des Kranzes (8) erstrecken, wobei die Schienen jeweils mit Drehachsen (17, 18) zusammenarbeiten, um einerseits die Führung und vertikale Bewegung des Bildaufnahmegeräts (2) in Bezug auf die Halterung (3) und andererseits die Winkelverschwenkung des Geräts (2) in Bezug auf die Halterung (3) in einer Ebene, die vertikal und senkrecht zu jener ist, die den ersten Kranz (8) enthält, zu erlauben.

9. Mechanische Vorrichtung nach Anspruch 3, **dadurch gekennzeichnet, dass** das Bildaufnahmegerät (2) an der seinem Objektiv (13) entgegengesetzten Seite mit einem doppelten Kranz (14) mit geschlossenem Profil fest verbunden ist, der einen ersten feststehenden äußeren Kranz (19) aufweist, innerhalb dessen ein zweiter innerer Kranz (20) drehbeweglich geführt wird, an dem das Bildaufnahmegerät (2) befestigt ist.

10. Mechanische Vorrichtung nach Anspruch 9, **dadurch gekennzeichnet, dass** der feststehende äußere Kranz (19) an seinem Umfang mit zwei parallelen Querstreben (15, 16) fest verbunden ist, die einander gegenüberliegend angeordnet sind und die an ihrem freien Ende jeweils eine Drehachse (17, 18) tragen, die jeweils in den vertikalen Schienen (11, 12) des ersten Kranzes (8) geführt wird.

11. Mechanische Vorrichtung nach Anspruch 10, **dadurch gekennzeichnet, dass** der feststehende äußere Kranz (19) an seinem Umfang und zwischen den Querstreben (15, 16) mit einem zweiten Getriebemotor (21) fest verbunden ist, um den Drehantrieb des inneren Kranzes (20) innerhalb des feststehenden äußeren Kranzes (19) und die Drehbewegung des Bildaufnahmegeräts (2) um seine Achse zu ermöglichen.

12. Mechanische Vorrichtung nach Anspruch 10, **dadurch gekennzeichnet, dass** die Querstrebe (16), die mit dem feststehenden äußeren Kranz (19) fest verbunden ist, einen dritten Getriebemotor (22) trägt, der die vertikale Bewegung des Bildaufnahmegeräts (2) im Inneren der Schienen (11, 12) entlang der Achse yy' von einer oberen Position zu einer unteren Position und umgekehrt ermöglicht.

13. Mechanische Vorrichtung nach Anspruch 3, **dadurch gekennzeichnet, dass** sie es in Abhängigkeit von der jeweiligen Winkelposition des Kranzes (8) um die Achse yy', die durch den Antrieb eines ersten Getriebemotors (9) erzielt wird, dem Bildaufnahmegerät (2) ermöglicht, mittels eines zweiten Getriebemotors (21) um seine Hauptachse zu schwenken, mittels eines dritten Getriebemotors (22) um seine horizontalen Achsen (17, 18) zu schwenken, und zwar von einer maximalen Position, in der das Objektiv (13) nach oben gerichtet ist, bis zu einer maximalen Position, in der das Objektiv (13) nach unten gerichtet ist, wobei alle Zwischenpositionen durchlaufen werden, und sich in vertikaler Translationsbewegung im Inneren der Schienen (11, 12) zu bewegen.
